# EUROPEAN PATENT SPECIFICATION

(11) **EP 4 403 012 B1**
(45) Date of publication and mention of the grant of the patent: **11.11.2026**
(21) Application number: 24152007.1
(22) Date of filing: 16.01.2024
(51) Int. Cl.: A01C 7/04, A01C 9/08

(54) **PLANTING UNIT**
PFLANZEINHEIT
UNITÉ DE PLANTATION

(30) Priority: 19.01.2023 CA 3187226
(43) Date of publication of application: 24.07.2024
(73) Proprietor: Allan Equipment Manufacturing Ltd., York Prince Edward Island C0A 1P0 (CA)
(72) Inventor: VAN SCHALKWYK, Daniel, York, C0A 1P0 (CA); GRAHAM, Layton, Harrington, C1E 2S4 (CA)
(74) Representative: AAA Patendibüroo OÜ

(56) References cited:
- WO-A1-2023/000104
- CN-A- 111 937 545
- CN-U- 206 498 673
- US-A- 3 246 806

## Description

### FIELD OF THE INVENTION

This invention relates generally to seed planting and singulating machines. More particularly, the invention relates to an improved potato seed planter that is adapted to rapidly singulate and dispense seeds at a controlled rate.

### BACKGROUND OF THE INVENTION

Chinese patent application CN111937545A discloses a yam planting equipment, Chinese utility model CN206498673U discloses a garlic seed metering device for a planter, and U.S. patent US3246806A discloses a bulb planter or planter of similar type irregularly shaped articles with said planter adapted to be mounted on a tractor.

Closest prior art is known from an international patent application WO2023/000104A, which discloses a planting unit for singulating a plurality of seeds, said planting unit comprising a seed holder, a seed discharge, at least one drive unit and a seed singulator. The seed singulator further comprises a seed singulating ledge and an excess seed ejector to eject any excess seeds from the seed singulating ledge onto the seed holder. The seed singulation ledge is attached to, or integral with, the outer circular wall, and both the outer circular wall and the ledge are mounted to, and stationery with respect to, the planter's frame. Above the seed singulating ledge are positioned flights that are moving relative to the outer circular wall and are driven by the at least one drive unit. These flights are mounted on the inner circular wall which can move (rotate) relative to the outer circular wall and ledge.

The background information discussed below is presented to better illustrate the novelty and usefulness of the present invention. This background information is not admitted prior art.

It is well recognized that proper and uniform spacing of seeds in a furrow is essential to maximizing crop yield. The first step in achieving uniform spacing is to accurately dispense one seed and one seed only at the proper timing. This may be referred to as seed "singulation" and/or to "singulate" seeds. A singulator attempts to separate one seed at a time from a plurality of seeds that are present in a seed bowl, seed hopper or the like, and then directs that separated seed down a seed path or tube to be presented for planting (such as in a furrow).

In the potato planting industry, seed potatoes are commonly cut into pieces prior to planting because all that is required for a seed is a piece of the seed potato that contains a potato eye. Sometimes whole potatoes are planted. Disadvantageously, because the seed potatoes are often cut into various shapes and sizes, and because both cut and whole potatoes are not perfectly round and do not have a uniform shape, potato seeds are difficult to singulate.

Conventional potato seed planters still suffer from a number of disadvantages when singulating seed potatoes. For example conventional "belted cup" planters are constrained by speed, where if the planter goes too fast and requires more rapid singulation, the seeds fall out of the cups. When the belt in such belted cup planter goes too fast, it misses picking up the seeds with each cup, and the seeds typically cavitate and bridge within the seed bowl that feeds the belted singulator device.

Additionally, the potato seed profile may differ from year to year. This may be done by cutting the potatoes to different sizes, e.g. each seed is half (1/2) of a potato or a quarter (1/4) of a potato. When using the conventional belted cup planters, farmers will typically change out the individual cups in their planters to cups that are appropriately sized for a particular batch of seed potatoes. This is laborious and creates additional work for potato farmers.

Therefore, what is needed is a potato planter and potato seed singulator that does not suffer from these disadvantages.

### SUMMARY OF THE INVENTION

The invention is defined by the appended claims.

### BRIEF DESCRIPTION OF THE DRAWINGS

Referring to the drawings, several aspects of the present invention are illustrated by way of example, and not by way of limitation, in detail in the figures, wherein:
FIG. 1a is a perspective view of an improved potato seed planter in accordance with a preferred embodiment of the present invention;
FIGS. 1b-1c are other perspective views of the potato seed planter of FIG. 1a;
FIG. 1d is a close-up perspective view a row of the four rows of planting units of the potato seed planter of FIG. 1a;
FIG. 2a a perspective view of a planting unit;
FIG. 2b is another perspective view of the planting unit of FIG. 2a;
FIG. 3a a top view of the planting unit of FIG. 2a;
FIG. 3b is a top perspective view of the planting unit of FIG. 2a;
FIG. 4 is a bottom view of the planting unit of FIG. 2a;
FIG. 5 is a front view of the planting unit of FIG. 2a;
FIG. 6 is a rear view of the planting unit of FIG. 2a;
FIG. 7 is a left side view of the planting unit of FIG. 2a;
FIG. 8 is a right side view of the planting unit of FIG. 2a;
FIGS. 9a and 9b are perspective views of another embodiment of a planting unit;
FIGS. 10a - 10h are perspective views of the planting unit of the embodiment of FIG. 9a, illustrating a sequence of potato seeds being singulated;
FIGS. 11 is a sectioned perspective view of the planting unit of FIG. 2a taken along line A-A in FIG. 3a;
FIGS. 12a - 12b are sectioned perspective views of the planting unit of FIG. 2a taken along line B-B in FIG. 3a;
FIG. 13 is a top perspective view of an embodiment of a planting unit and also showing a potato seed sensor;
FIG. 14 is a top perspective view of an embodiment of an inner circular wall with flights mounted thereon;
FIG.15 is a top perspective view of another embodiment of the flights;
FIGS. 16a and 16b are perspective views of another embodiment of the planting unit, utilizing the embodiment of the flights of Fig. 15;
FIGS. 17a and 17b are top perspective views of yet another embodiment of the planting unit, without flights;
FIG. 17c is a bottom perspective view of the planting unit of FIG. 17a;
FIG. 17d is a sectioned perspective view of the planting unit of FIG. 17a;
FIG. 18 is a top perspective view of yet another embodiment of the planting unit without flights, similar to the embodiment of the planting unit of FIG. 17a;
FIGS. 19a - 19c are top perspective views of a portion of the embodiment of the planting unit of FIG. 18, and illustrating a sequence of potato seeds being singulated; and
FIGS. 20a - 20b are top and bottom perspective views, respectively, of an embodiment of an inner circular wall with the seed singulating ledge mounted thereon.

### DEFINITION SECTION

Horizontal plane, as used herein, refers to a plane that is horizontal at a given point if it is perpendicular to the gradient of the gravity field at that point, in other words, apparent gravity is what makes a plumb bob hang perpendicular to the plane at that point. In other words a horizontal plane in the plane that is perpendicular to the line that passes through the center of the Earth.

Vertical plane, as used herein, refers in astronomy, geography, geometry, and related sciences and contexts, to a direction passing by a given point if it is locally aligned with the gradient of the Earth's gravity field, i.e., with the direction of the gravitational force (per unit mass, i.e. gravitational acceleration vector) at that point.

### DETAILED DESCRIPTION OF THE PREFERRED EMBODIMENTS

The following description is of preferred embodiments by way of example only and without limitation to the combination of features necessary for carrying the invention into effect. Reference is to be had to the Figures in which identical reference numbers identify similar components. The drawing figures are not necessarily to scale and certain features are shown in schematic or diagrammatic form in the interest of clarity and conciseness.

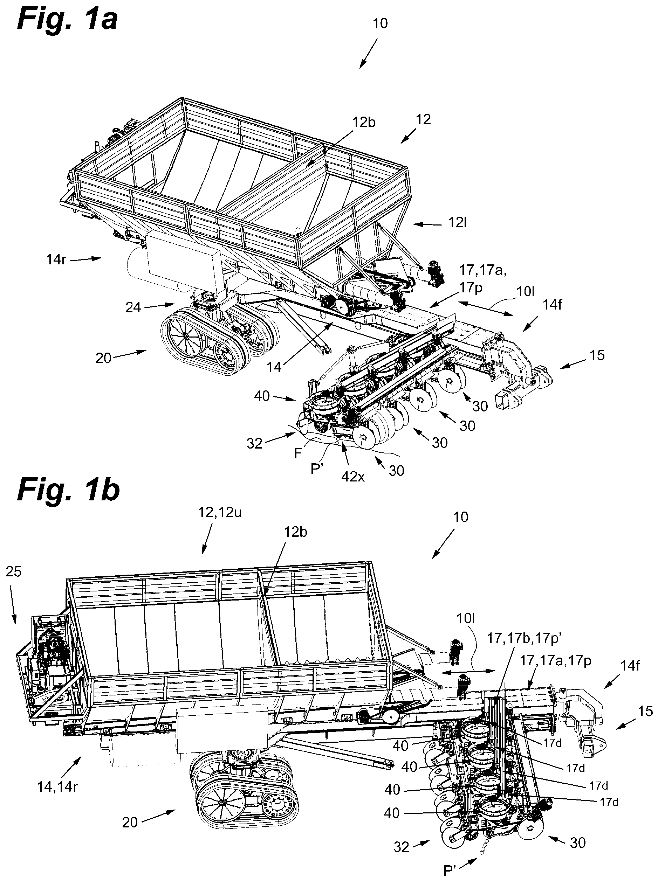

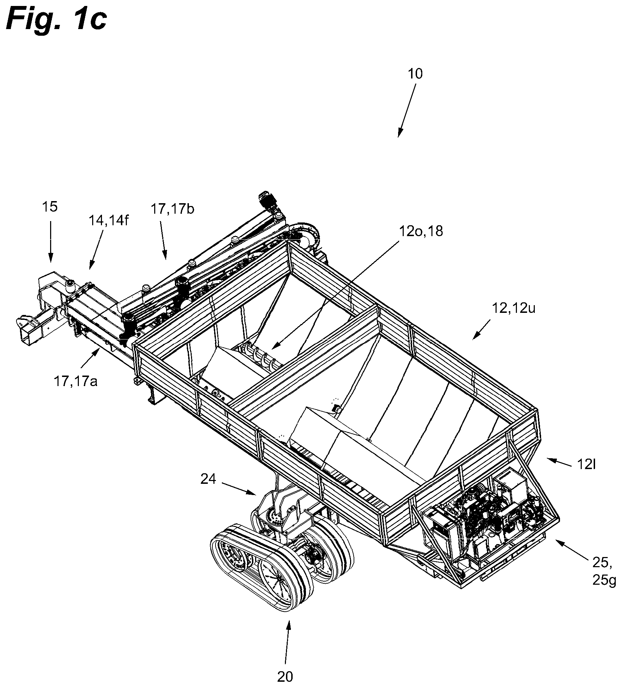

A first embodiment of the potato seed planter 10 of the present invention is shown in FIGS. 1a - 1c. While the present invention involves an improved potato seed planter, the principles of the present invention are not limited to potato seed planters. It will be understood that, in light of the present disclosure, the seed planter disclosed herein can be used in connection with other types of seeds, bulbs, onions, flowers, and the like. Additionally, to assist in the description of the potato seed planter, words such as top, bottom, front, rear, right and left are used to describe the accompanying figures. It will be appreciated, however, that the present invention can be located in a variety of desired positions and angles, and that the various components can be arranged in other suitable configurations. A detailed description of the improved potato seed planter now follows.

As best seen in FIGS. 1a - 1c, the potato seed planter 10 comprises a seed hopper 12 for receiving potato seeds P, and a frame 14 for supporting the hopper 12. The frame 14 may have a front frame end 14f and a rear frame end 14r. One or more continuous tracks or wheels 20 are preferably attached to the frame 14. Various linking members 24 may be used to attach the continuous tracks 20 to the frame 14. The continuous tracks 20 are used to drive the potato seed planter 10 and transport it to and from the fields to be planted in a conventional manner.

The potato seed planter 10 preferably includes a conventional drive or power generating system 25 for powering one or more components of the planter 10. One skilled in the art will appreciate that the power generating system 25 of the potato seed planter 10 may be an engine driven generator 25g or a hydraulic-based power system. The potato seed planter 10 preferably comprises a hitch link 15 at the front frame end 14f for connecting the potato seed planter 10 to a tractor (not shown) in a conventional manner.

The potato seed planter 10 is designed to be pulled behind a tractor (not shown), and the tractor may also provide power to the planter 10. As known in the art, tractors typically provide hydraulic or mechanical power to a towed device such as a planter 10. The potato seed planter 10 can also be powered by the power generating system 25, and/or by hydraulic or mechanical power from the tractor, or it can be powered from any other suitable source.

As best seen in FIGS. 1a-1c, at least one planting unit 40 is attached or linked to the frame 14 in a conventional manner, preferably between the hitch link 15 and the seed hopper 12. A plow or furrow opener 30 is preferably provided for each planting unit 40 to create a furrow F to receive a potato seed P, and a furrow closing member or disc 32 is preferably provided for each planting unit 40 to cover the seeds P with soil and close the furrow. It will be appreciated that the furrow opener 30 and furrow closer 32 are adjustable in a conventional manner to create furrows of the desired size, spacing, depth, and the like.

The planting unit 40 dispenses individual potato seeds P supplied by the seed hopper 12 into a furrow F created by the furrower opener 30 at a controlled rate, accurately dispensing one seed and one seed only at the proper timing. The potato seed planter 10 may include any suitable number of planting units 40 and associated components to plant multiple rows at one time. Thus, although the accompanying figures illustrate the potato seed planter 10 as a four-row planter, it can plant any desirable number of rows, e.g. such as from one to twelve rows or more. One skilled in the art will understand that while the preferred embodiments of the potato seed planter 10 illustrate the various components of the planter 10 in specific locations, these components may be arranged in any suitable locations and configurations.

As best seen in FIGS. 1a - 1c, the seed hoppers 12 are sized and configured to receive numerous potato seeds P that are to be planted. As is conventional, the seed hopper 12 includes generally upright upper walls 12u, angled lower walls 12l, and one or more openings 12o at the hopper's bottom. A conventional auger 18 may be provided below or adjacent the one or more openings 12o, to assist with the controlled discharge of potato seeds P from the seed hopper 12 in a conventional manner. The seed hopper 12 may also contain baffles 12b and/or shaker members (not shown) to agitate the seeds P. A conveyor system 17 is preferably provided to carry the seeds P exiting out from the hopper's bottom opening 12o to one or more planting units 40. For example, a first conveyor 17a may carry seeds P from the hopper 12 a first distance along a first path 17p, which may be substantially parallel to the longitudinal axis 10l of the planter 10. This may be a conventional conveyor.

One or more secondary conveyors 17b may also be provided to carry seeds P from the first conveyor 17a a second distance to the one or more planting units 40 along a second path 17p'. These may also be conventional conveyors. The secondary path 17p' which may be substantially perpendicular to the first path 17p, such as in an embodiment of a planter 10 where a plurality of planting units 40 are provided in a row that is substantially perpendicular to the planter's longitudinal axis 10l; as can be seen in FIGS. 1a and 1b. The baffles and any shaker members are used to keep the pieces of potato seed P separated and agitated while in the hopper 12, but they are not required.

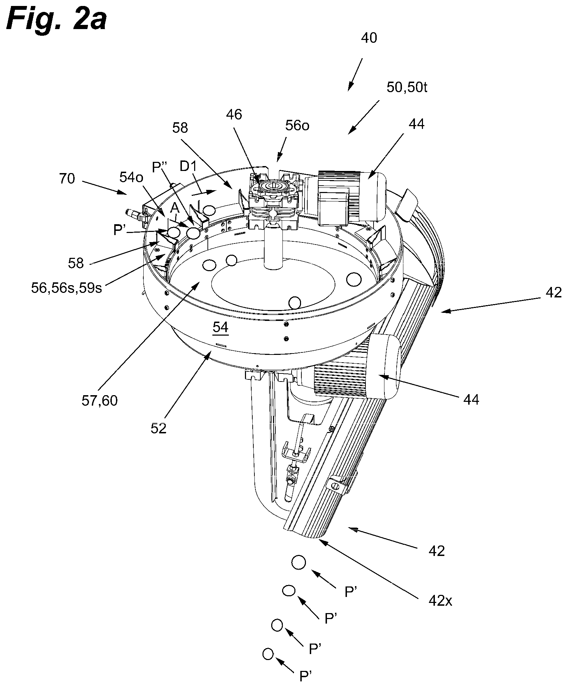

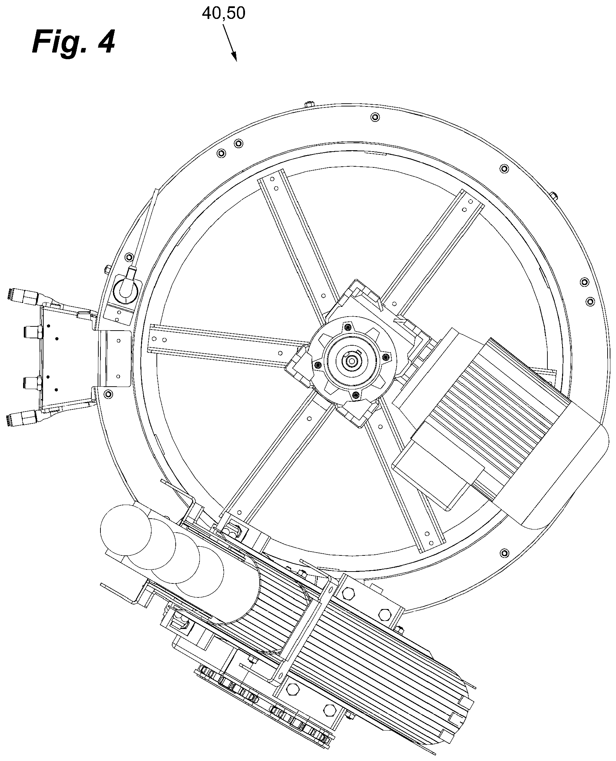

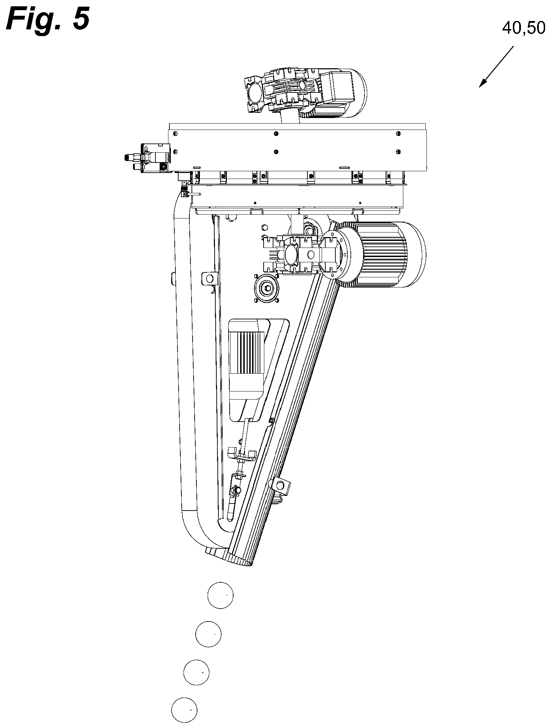

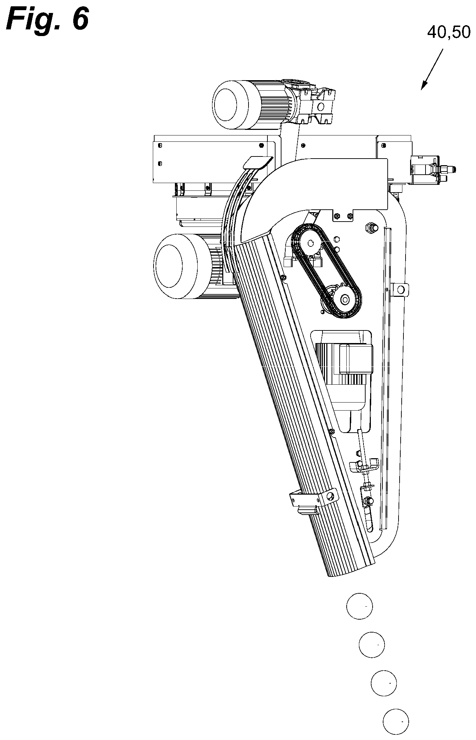

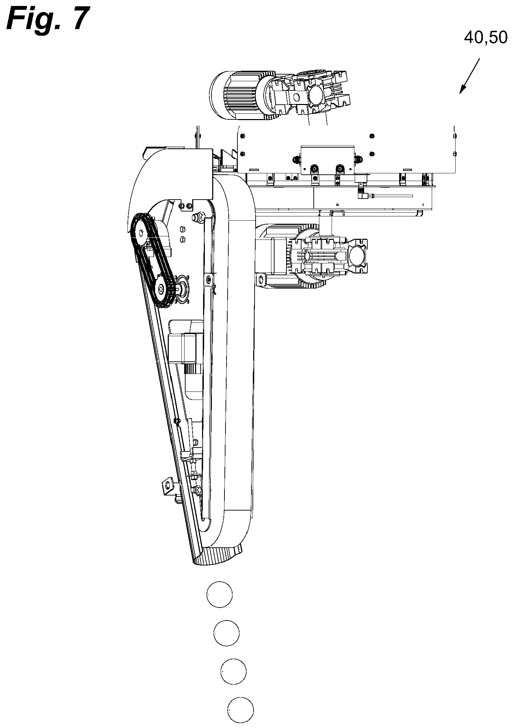

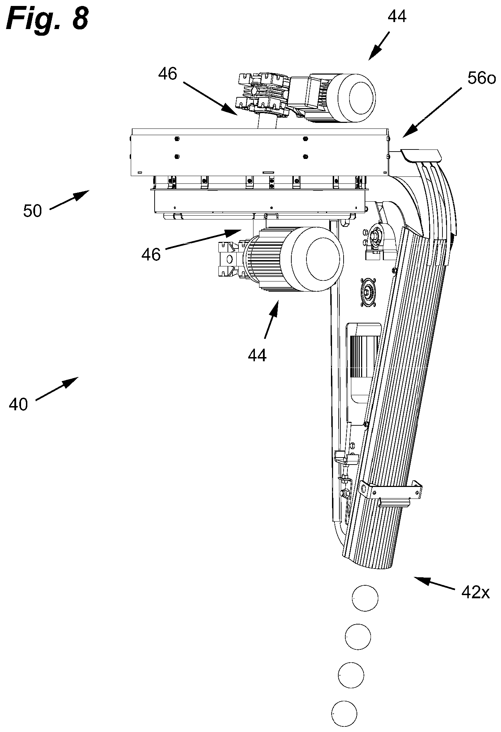

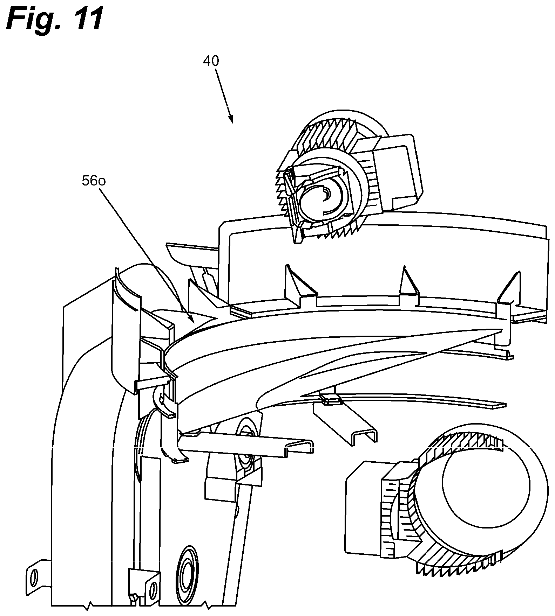

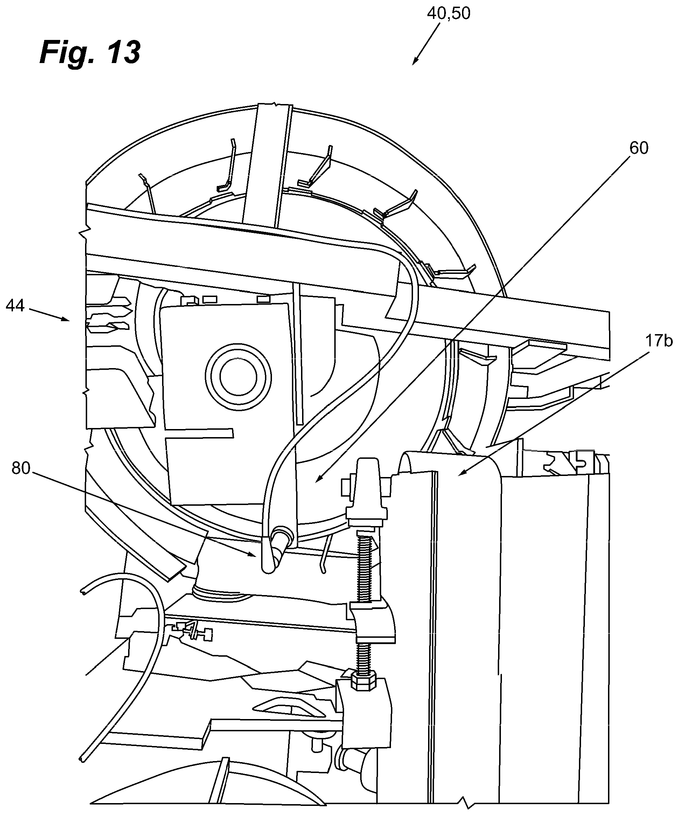

As seen in FIGS.2a - 13, each planting unit 40 preferably comprises a seed discharge or seed chute 42, one or more drive units 44, one or more drive linkages 46 and a singulating mechanism or seed singulator 50. The seed singulator 50 separates individual potato seeds P from a plurality of such seeds PP and delivers them to the seed discharge 42 for subsequent planting in the ground at a desired and uniform spacing. The drive units 44 preferably provide rotary drive and other actuating forces to operate the planting unit 40 and its various components. The drive units 44 may be electrical or hydraulic motors and may be powered by the power generating system 25 in a conventional manner. The linkages 46 may connect the drive units 44 to the various components of the planting unit 40 in a conventional manner and may further be provided with gearing mechanisms to provide these components with sufficient mechanical force (including rotational force) to allow for efficient operation of the planting unit 40 and the singulator 50.

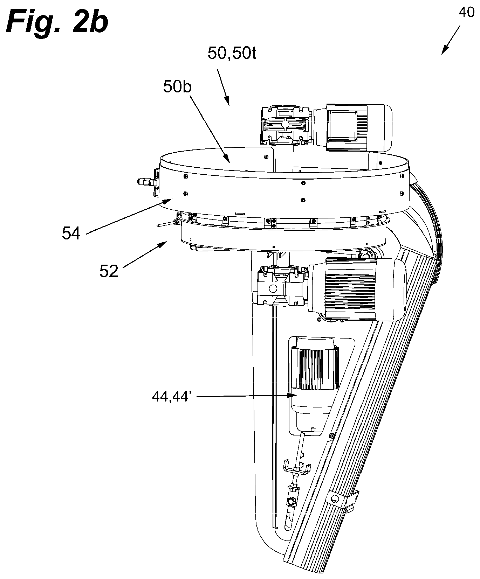

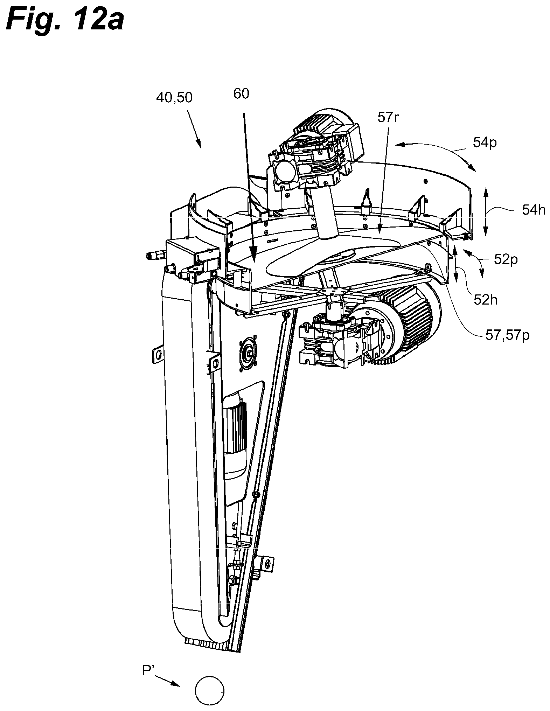

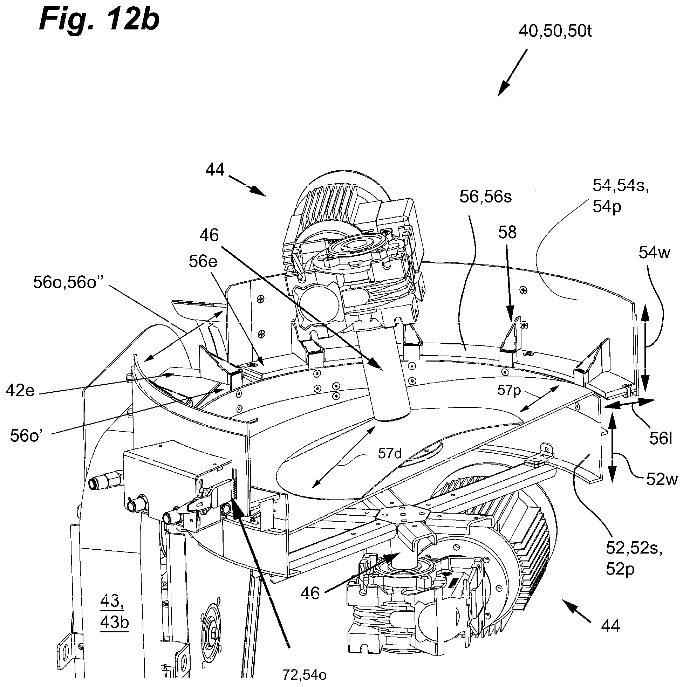

Referring to FIGS. 2a, 2b, 12a and 12b, the seed singulator 50 preferably features an open top 50t and a stepped bowl-like configuration having a lower inner circular wall 52, an upper outer circular wall 54 and a seed singulating ledge, surface or step 56 therebetween; see Fig. 12b. A substantially circular seed holder or bottom support 57 is preferably provided within the lower inner circular wall 52. The inner and outer circular walls 52, 54 each preferably comprise an inner seed retention surface, identified as 52s and 54s respectively, and with each such surface 52s, 54s having a wall axis 52w, 54w; see Fig. 12b. The seed singulating ledge 56 preferably comprises a seed support surface 56s having a ledge axis 56l.

The inner and outer circular walls 52, 54 and the seed singulation ledge 56 are preferably circular planar members as shown in the figures. The inner and outer circular walls 52, 54 each form a circular perimeter 52p, 54p having a respective wall height 52h,54h; see Fig. 12a. During operation of the planter 10, the wall axis 52w, 54w of the seed retention surfaces 52s, 54s are preferably maintained in a manner that is substantially along the vertical plane, while the ledge axis 56l is preferably maintained substantially along the horizontal plane. Accordingly, during operation, gravity will encourage any potato seeds P to be supported on or by the singulating ledge 56.

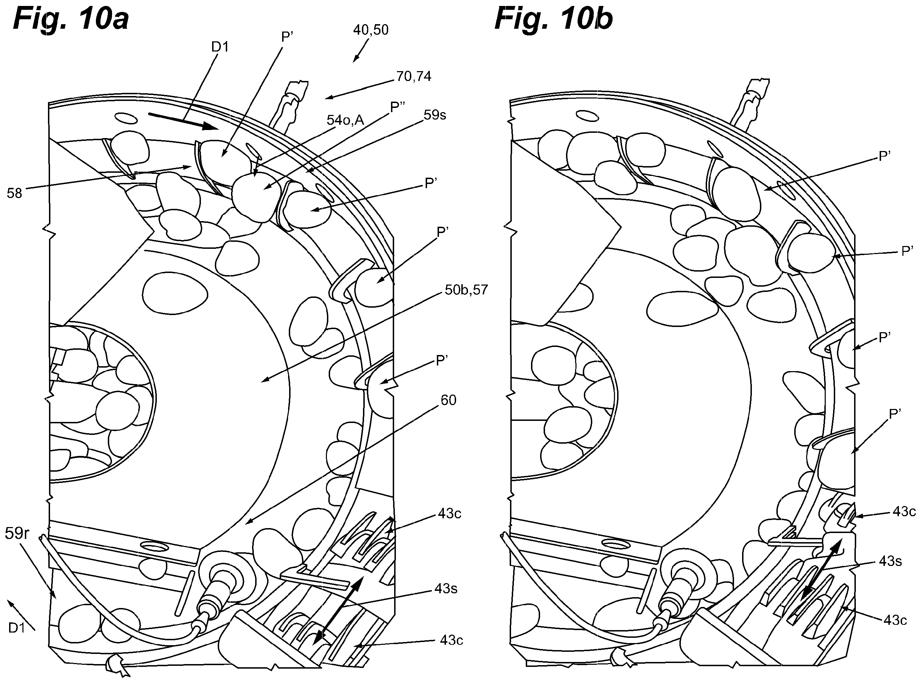

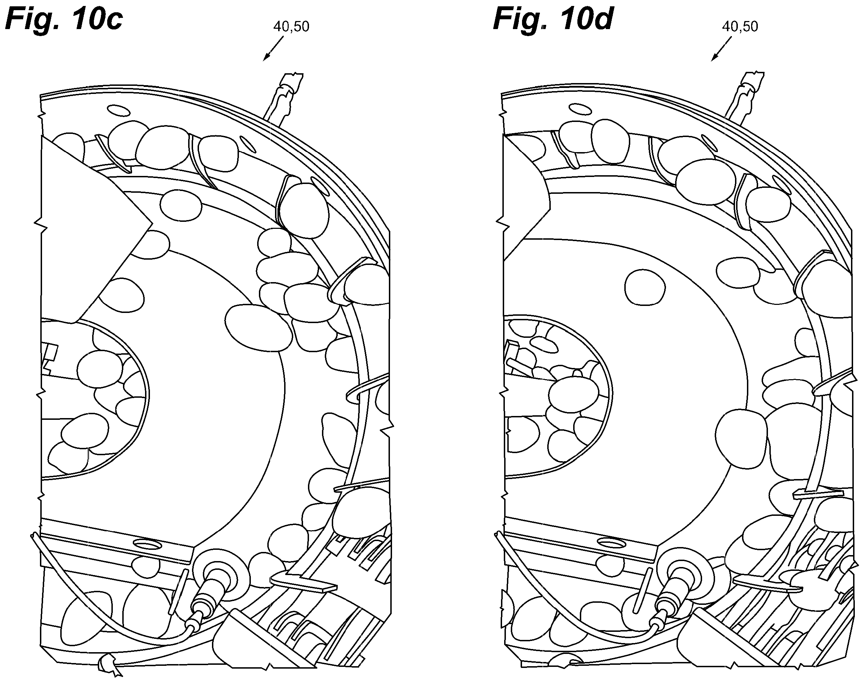

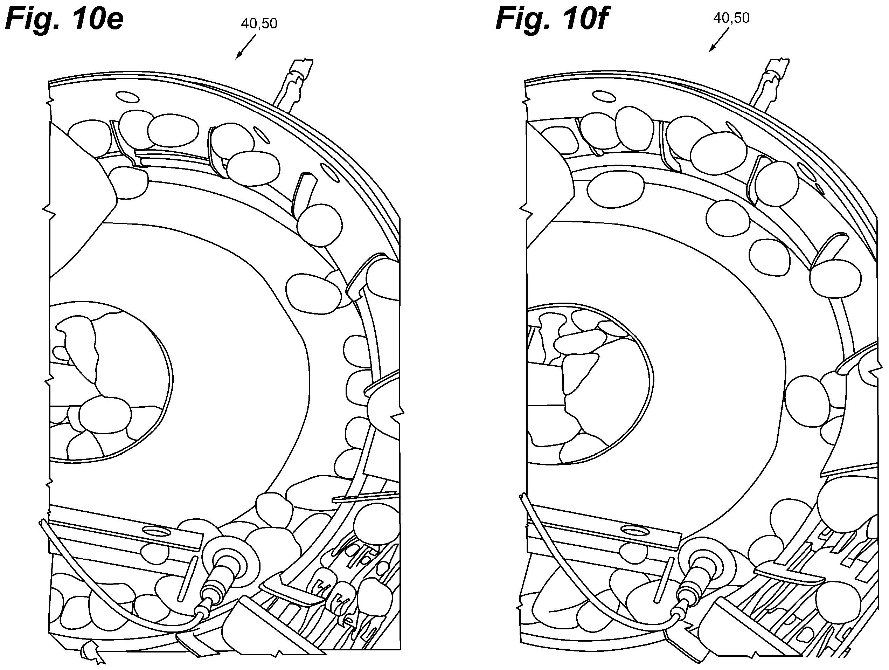

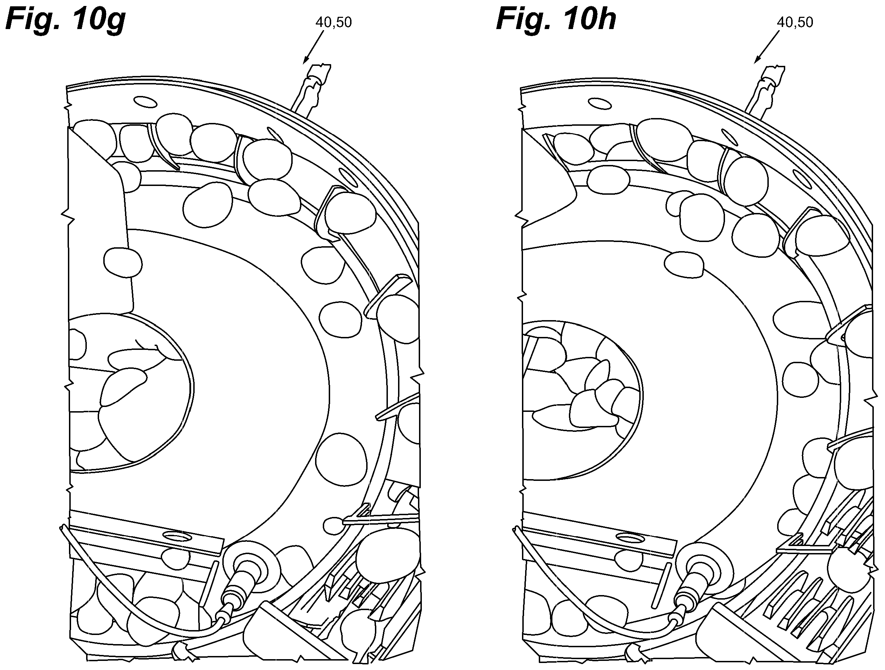

The lower inner circular wall 52, the upper outer circular wall 54, the seed singulating ledge 56 and the seed holder 57 cooperate to provide the singulator with its stepped bowl-like configuration and together they form a seed singulation area or seed bowl 50b; see Fig. 2b. During operation of the planting unit 40 the seed bowl 50b contains or holds a plurality of potato seeds PP therein; e.g. see Figs. 10a-10h. The seed holder 57 substantially seals the bottom of the seed bowl 50b and prevents the plurality of seeds PP from exiting downward out of the seed bowl 50b. The seed retention surfaces 52s, 54s act as bowl walls, having sufficient wall heights 52h, 54h to prevent the plurality of seeds PP from exiting radially out of the seed bowl 50b past their respective circular perimeters 52p, 54p; except for as specifically noted below to feed or exit singulated potato seeds from the singulator 50 to the seed discharge 42.

While each of the lower inner circular wall 52, the upper outer circular wall 54 and the bottom seed holder 57 are separate components, which each may move or rotate relative to each other, they are dimensioned with sufficiently close tolerances and spacing so that they can cooperate as noted above to form the seed bowl 50b and contain seeds PP therewithin. Advantageously, the seed singulation area or seed bowl 50b will hold these plurality of seeds PP while the seed singulator 50 separates individual potato seeds P therefrom and delivers them to the seed discharge 42.

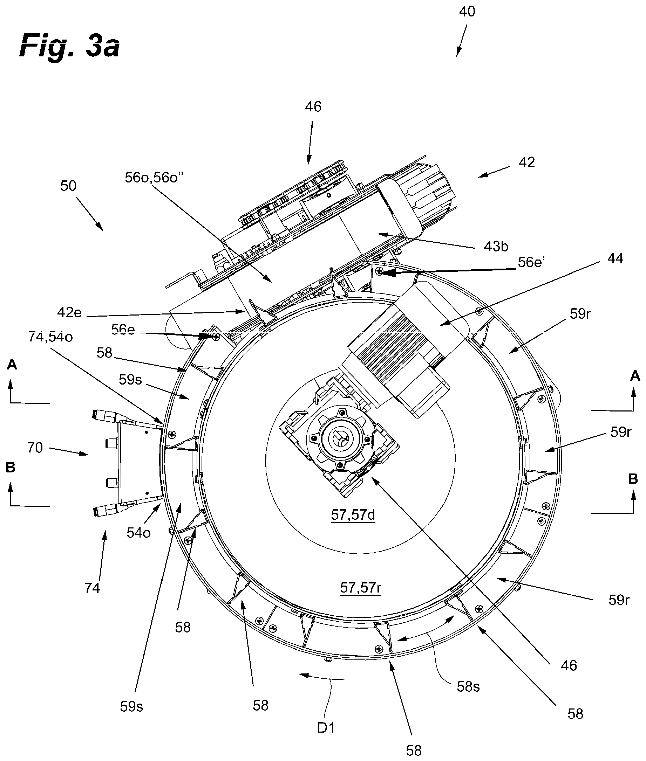

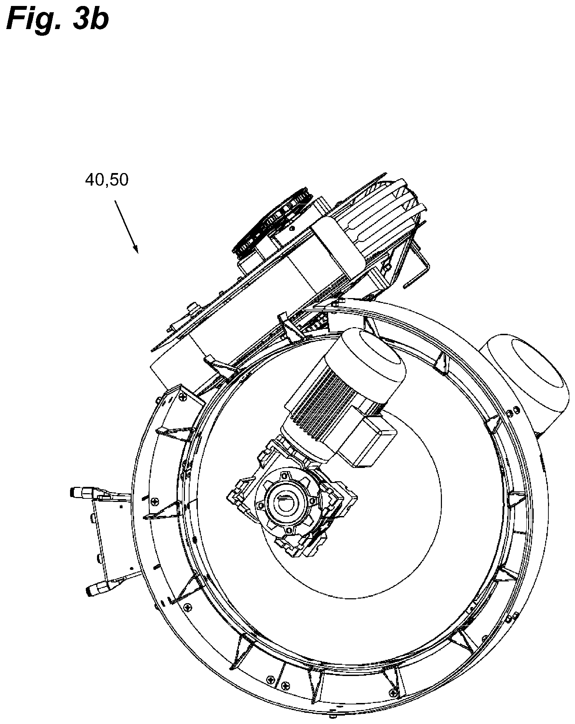

According to the invention the seed singulating ledge 56 is an annulus sector (circular ring sector) positioned between the outer and inner circular perimeters 52p, 54p; i.e. the ledge 56 does not form a complete annular path between said perimeters 52p, 54p. Instead, a seed discharge opening 56o is provided below and/or adjacent ends 56e, 56e' of the annular sector ledge 56; see Figs. 3a and 12b.

The seed discharge opening 56o may be below and/or radially outward from said perimeters 52p, 54p. In the embodiment of Figs. 2a-8 and 11-12b, the seed discharge opening 56o features both a first component 56o' that is below the level of ledge 56 and a second component 56o" comprising an opening or passage in the upper outer circular wall 54; see Fig. 12b.

The seed singulating ledge 56 may also be divided into a seed receiving area 59r and a seed singulation area 59s; see Fig. 10a. During operation of the planting unit 40 the seed receiving area 59r will generally receive a plurality of potatoes PP from either the secondary conveyor 17b or from the seed holder 57. Preferably, the seed singulation ledge 56 is attached to, or integral with, the outer circular wall 54; and both the outer circular wall 54 and the ledge 56 are mounted to, and stationery with respect to, the planter's frame 14; e.g. via one or more of the conveyor system 17, such as a secondary conveyor 17b.

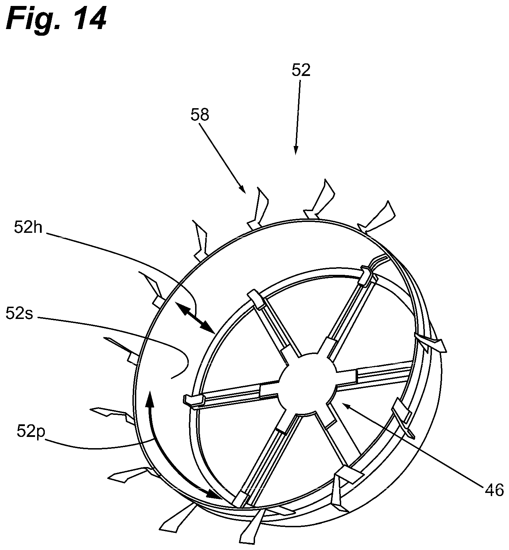

The seed singulator 50 preferably comprises a plurality of flights 58 positioned above the seed singulating ledge 56. These flights 58 may be mounted on the inner circular wall 52 which can move (rotate) relative to the outer circular wall 54 and ledge 56. One embodiment of the inner circular wall 52, with flights 58 mounted thereon, is shown in Fig. 14. Preferably, both the inner circular wall 52 and the flights 58 are actuated or driven (e.g. in a rotary fashion) along the first direction D1 by one or more of the drive units 44 and associated linkage 46 in a conventional manner.

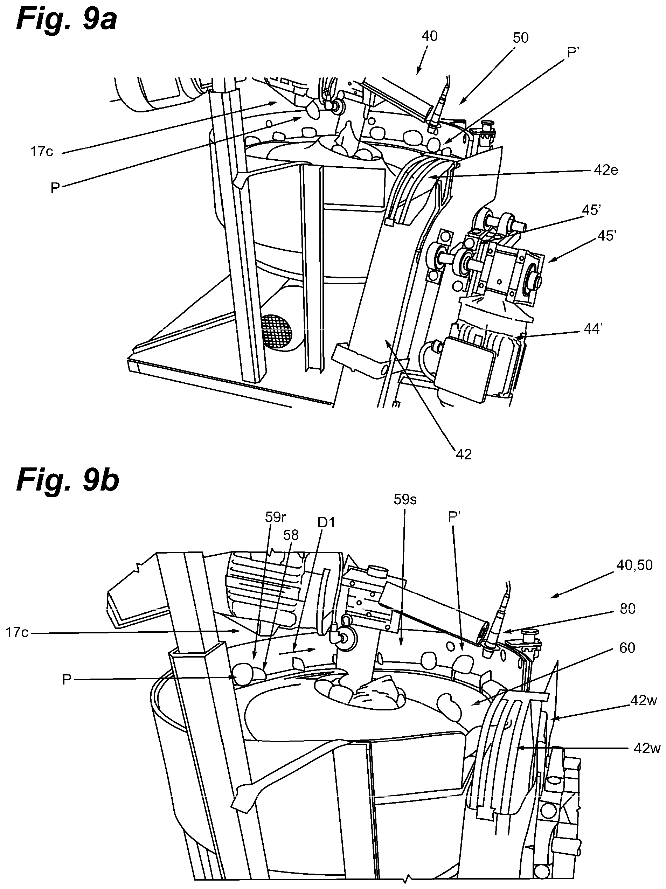

During operation the rotating flights 58 function to advance potato seeds P that are present on said ledge 56 in a first direction D1 at a first speed from the seed receiving area 59r to the seed singulation area 59s, where any plurality of seeds PP between a corresponding set of flights 58 are then singulated, as further described below. In this embodiment it is the flights 58 which advance any potato seeds P along the ledge 56 radially (i.e. seeds being contained on ledge 56 by upper outer circular wall 54) in the first direction D1 (e.g. see FIG. 10a). The flights 58, as supported by the inner circular wall 52, will continue rotating in the first direction D1 and pass over and/or beside the seed discharge opening 56o. Any singulated seeds P' pushed or advanced by the flights 58 will then preferably exit out of the opening 56o and into an entrance 42e of the seed discharge 42; although some may, however, fall back into the seed bowl 50b to rest on the seed holder 57. Preferably, the seed discharge 42 further comprises one or more conventional walls or barriers 42w barrier to assist with directing any singulated seeds P' exiting the singulator 50 down into the chute 42 (see Fig. 9).

For example, any seeds P pushed or advanced by the flights 58 along a radial path on the ledge 56, along the first direction D1 from the seed receiving area 59r to the seed singulation area 59s, will be singulated at said seed singlation area 59s (as further described below) and then preferably exit out of the opening 56o and into the entrance 42e of the seed discharge 42, such as due to the force of gravity (e.g. through the first component 56o') or in a centrifugal-like manner (through the second component 56o") or via a combination thereof.

The seed chute is preferably a hollow tubular member having an exit 42x to discharge the singulated potato seeds P'. Preferably the exit 42x of each planting unit's seed chute 42 is positioned and directed behind the unit's respective furrow opener 30 and in front of the unit's respective furrow closer 32, so that singulated seeds P' exiting therefrom will be placed into a furrow F created in the ground by the planter 10, preferably in a singulated and spaced-apart manner (see FIG. 1a).

Preferably, the seed chute 42 further comprises a seed delivery conveyor 43, which may comprise an endless or continuous chain or belt 43b. Continuous belt 43b preferably carries a plurality of spaced apart seed carrying members, flights or cups 43c to maintain the singulated seeds P' substantially in their singulated condition while travelling down the chute 42 towards the exit 42e. In a preferred embodiment, the spacing 43s between each set of the seed carrying flights or cups 43c is 14.61 cm (5.75 inch) spacing. The delivery conveyor 43 is preferably placed within the within the chute's hollow interior, and the individual seed carrying members 43c are dimensioned to maintain a desired potato seed singulation distance (between individually singulated seeds P'; e.g. maintain a substantially 14.61 cm (5.75 inch) spacing between individually singulated seeds).

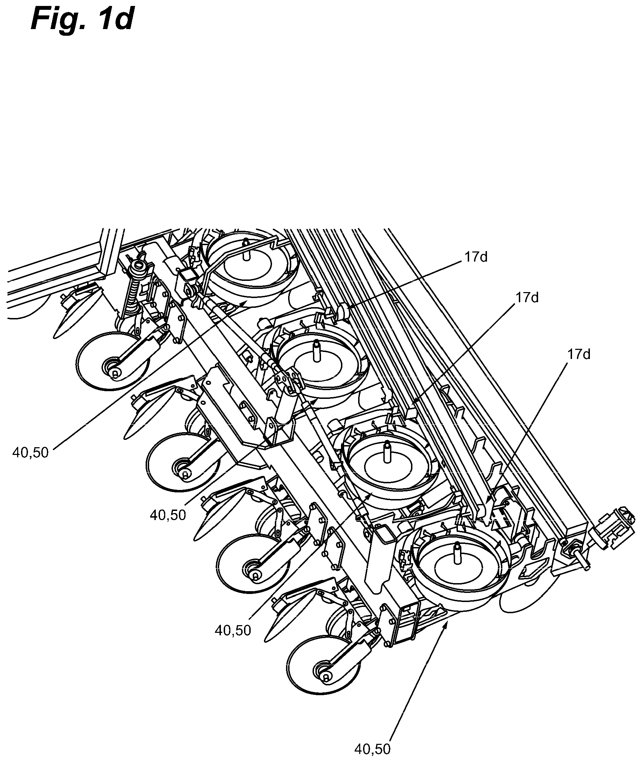

During operations a plurality of seeds PP are provided to a seed deposit area 60 within the singulator 50 of each planting units 40 by the one or more secondary conveyors 17b; e.g. seeds PP conveyed from the seed hopper 12. The seed deposit area 60 may be an area within the inner circular wall 52 and above the seed holder 57. The plurality of seeds PP may simply discharge from the secondary conveyors 17b into seed deposit area 60 by dropping down at the secondary conveyor's head or discharge end 17d (the discharge ends 17d preferably placed above of their respective planting unit 40 and/or singulator 50; see Fig. 1b and 1d). A conveyor discharge chute 17c may be provided to guide the plurality of potato seeds P from the discharge end 17d into the deposit area 60, preferably above the seed receiving area 59r (see FIGs. 9a-9b).

Preferably the seed holder 57 further comprises a seed receiving surface 57r having a substantially circular perimeter 57p. The seed receiving surface 57r preferably comprises a central dome or frustum-like portion 57d and a peripheral flanged or disc-like periphery 57f. Seed holder 57 preferably rotates relative to the outer circular wall 54, the ledge 56 and the inner circular wall 52 bearing the flights 58; preferably driven by one or more of the drive units 44 via associated linkage 46 in a conventional manner. Seed holder preferably rotates in the first direction, but at a second speed which is preferably faster than the first speed of the inner circular wall 52 and its flights 58. More preferably, the seed holder 57 is angled slightly relative to the inner and outer circular walls 52, 54 and the ledge 56; e.g. 15 degrees, see FIG. 12b. As such, this angle allows a portion of the seed holder's flanged periphery 57f to come up to the ledge 56, while at the same time creates another portion of the seed holder's flanged periphery to be near the bottom of the inner circular wall 52 forming the seed deposit area 60. This angled aspect of the seed holder 57, wherein the lower part of holder 57 is generally adjacent the seed singulation area 59s and the raised part of the holder 57 is generally adjacent the seed receiving area 59r, functions to drive seeds PP into said seed receiving area 59r while discouraging seeds PP from entering the seed singulation area 59s directly from the holder 57 (instead seed PP are driven by flights 58 in a radial manner on the seed singulating ledge 56 along the first direction D1 from seed receiving area 59r to seed singulation area 59s). Advantageously, this enhances seed singulation (at seed singulation area 59s) because any excess seeds PP (on ledge 56) can easily be driven back onto the holder 57.

The singulator 50 preferably further comprises an excess seed ejector 70 to eject excess seeds P" from between the flights 58 on the ledge 56 as they pass through the seed singulation area 59s, and thereby leaving only a single singulated seed P' adjacent its corresponding flight 58. The seed ejector 70 is preferably a pneumatic seed ejector, capable of providing a burst of air A of suitable force to push excess seeds P" back into the seed holder 57; e.g. see Fig. 10a. A conventional air source (not shown) may be provided to the pneumatic seed ejector 70, and an air nozzle 74 may be directed through a slit or opening 54o in the outer circular wall 54, wherein any bursts of air A are directed through the nozzle 74 to force any excess seeds P" back onto the seed holder 57, thereby singulating the seeds.

Preferably an ultrasonic sensor 80 is provided to measure the average height of the seed PP on top of the seed holder 57. A low/high threshold may be configured to support different sizes of seed and determine when the conveyor system 17 needs to supply more seed P from the hopper 12 to the planting unit 40.

In a preferred embodiment of the singulator 50, the flights 58 advance in the first direction D1 at a speed of 42 RPM, the seed holder 57 rotates at 50 RPM, the circular perimeter 54p has a 50.8 cm (20 inch) diameter, the circular perimeter 52p has an 45.7 cm (18 inch) diameter, and the distance or spacing 58s between each pair of flights 58 is 11.7 cm (4.625 inches). This provides 10 sets of potato seeds per second to the seed discharge 42. Further in a preferred embodiment, the actuation of the pneumatic seed ejector 70 will be timed to the speed of the flights 58 so that air is delivered to the first (leading) half of the spacing 58s between the flights, to knock off any excess seeds, while air is stopped for the second (trailing) half of the spacing 58s.

The rotational speeds of the flights 58 may be adjusted to obtain a desired set of singulated potato seeds per second at the seed discharge 42. For example, for the preferred embodiment noted in the paragraph above, for a 1 set/sec, the flights 58 spins at approximately 4.2 RPM; for a 3 set/sec, the flights 58 spins at 12.8 RPM; for a 6 set/sec, the flights 58 spins at 25.7 RPM; for a 9 set/sec, the flights 58 spins at 38.5 RPM; and for a 12 set/sec, the flights 58 spins at 51.4 RPM. Preferably the seed holder 57 will continue to spin at 50 RPM to ensure that seeds are directed to the seed receiving area 59r from the seed bowl 60 in a centrifugal-like manner. Once processed by the singulator 50, individual seeds P exit the singulator 50 at a desired frequency and spacing so that the planting unit 40 accurately dispenses one seed and one seed only at a desired timing and frequency.

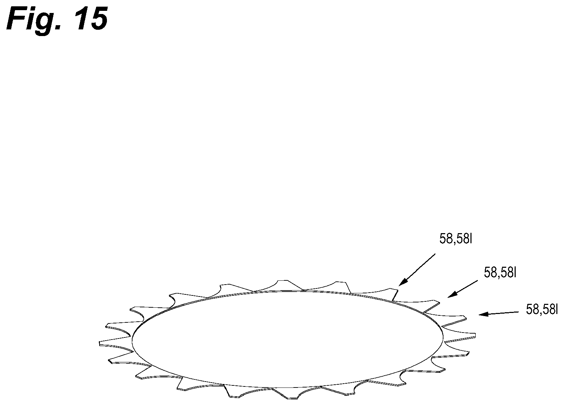

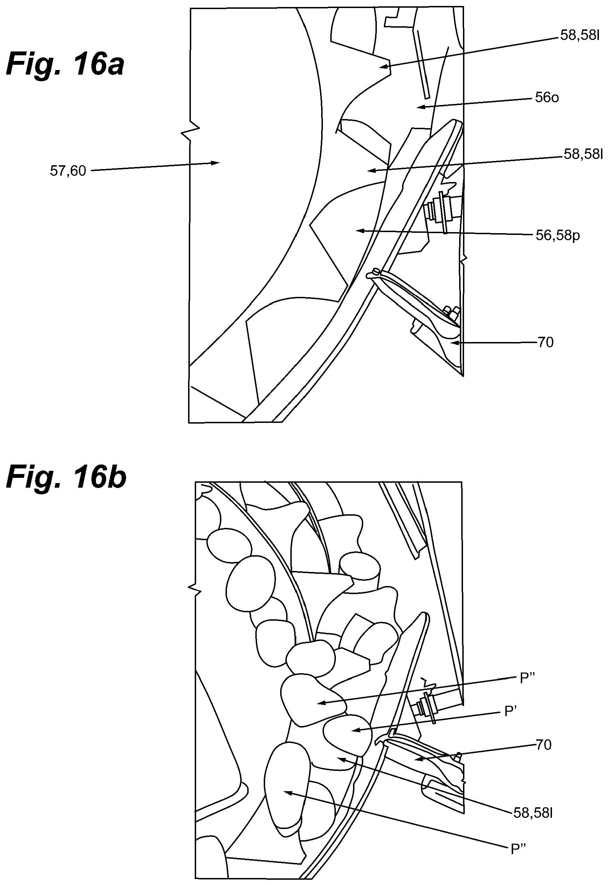

Figures 15 and 16a-16b illustrated another embodiment of the invention wherein the flights 58 comprise a triangular configuration and are raised a few centimeters above the seed singulating ledge 56, thereby creating pockets 58p to receive a singulated seed P' and a support ledge 58l whereupon any excess seeds P" will sit. Advantageously, singulated seeds P' in the pocket 58p will be less likely to be knocked back into the seed bowl, while excess seeds P" on supported by the ledge 58l are more easily removed therefrom by the seed ejector 70 and returned to the seed bowl 60.

Preferably, a first drive unit 44' and a first linkage 46' is provided to drive and power the continuous belt 43b of the delivery conveyor 43 in a conventional manner, a second drive unit 44" and a second linkage 46" is provided to drive and power the seed holder 46 in a conventional manner, and a third drive unit 44‴ and a third linkage 46‴ is provided to drive and power the flights 48 (and any associated lower inner circular wall 52) in a conventional manner.

### Additional Embodiments

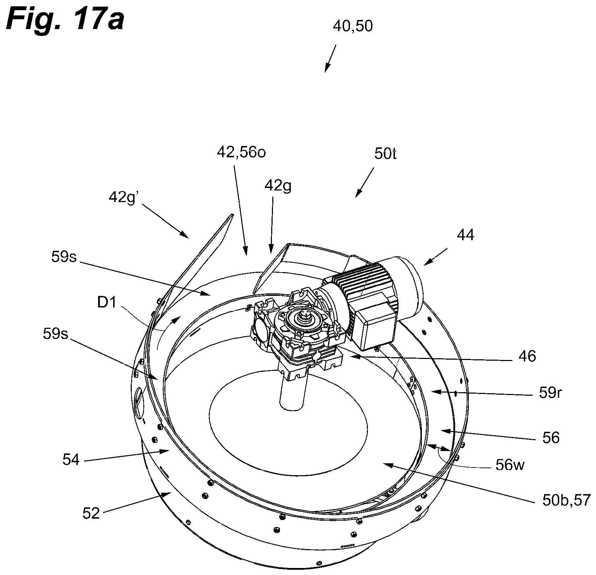

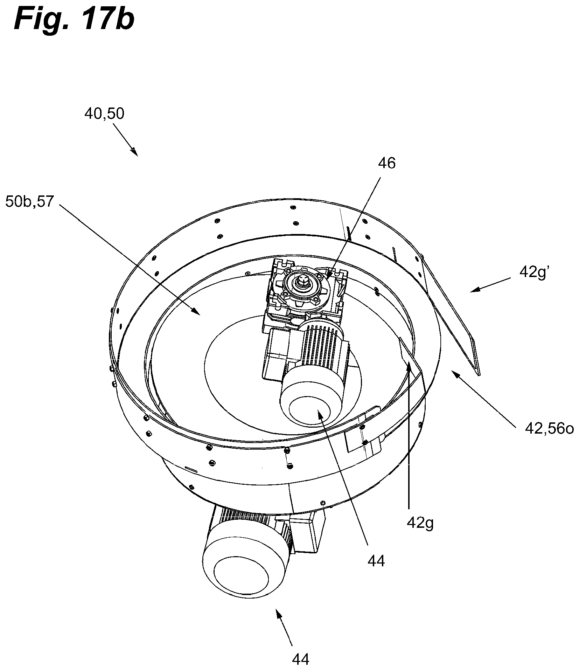

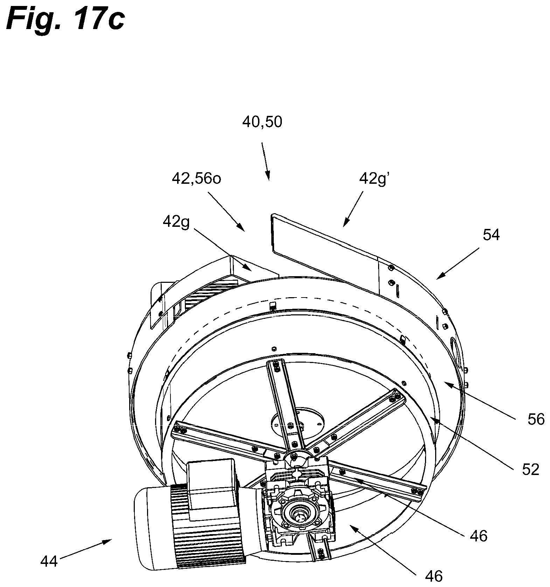

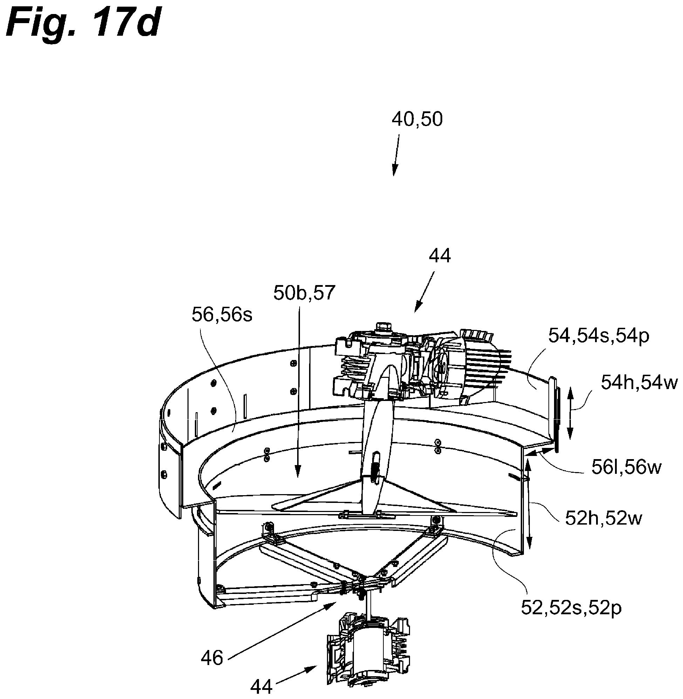

Figures 17a-17d illustrate another embodiment of a planting unit 40. This embodiment of the planting unit 40 is similar to the previous embodiments but is without flights. This embodiment preferably comprises a seed discharge 42, one or more drive units 44, one or more drive linkages 46 and a singulating mechanism or seed singulator 50.

The seed singulator 50 in this embodiment preferably features an open top 50t and a stepped bowl-like configuration having a lower inner circular wall 52, an upper outer circular wall 54 and a seed singulating ledge, surface or step 56 therebetween. A substantially circular seed holder or bottom support 57 is preferably provided within the lower inner circular wall 52. The inner and outer circular walls 52, 54 each preferably comprise an inner seed retention surface, identified as 52s and 54s respectively, and with each such surface 52s, 54s having a wall axis 52w, 54w. The seed singulating ledge 56 preferably comprises a seed support surface 56s having a ledge axis 56l and a ledge width 56w.

The inner and outer circular walls 52, 54 and the seed singulation ledge 56 are preferably substantially circular planar members as shown in the figures. The inner and outer circular walls 52, 54 each preferably form a circular perimeter 52p, 54p having a respective wall height 52h,54h. During operation of the planter 10, the wall axis 52w, 54w of the seed retention surfaces 52s, 54s are preferably maintained in a manner that is substantially along the vertical plane, while the seed supporting surface 56s and its ledge axis 56l is preferably maintained substantially along the horizontal plane. Accordingly, during operation, gravity will encourage any potato seeds P to be supported on or by the singulating ledge 56. Preferably, the ledge width 56w is of such dimensions to support a plurality of seeds only in a single row-like manner (i.e. in a serial manner along the ledge's circumferential profile) and thereby causing any additional seeds (that may otherwise have been supported in a secondary row on the ledge 56) to fall back into the seed holder 57. The inventors have found that a ledge width 56w between 3.81 cm (1.5 inches) to 6,35 cm (2.5 inches) is optimal to support most potato seeds in such single row-like manner and prevent the formation of a dual row of seeds on the ledge 56 during operations.

The lower inner circular wall 52, the upper outer circular wall 54, the seed singulating ledge 56 and the seed holder 57 cooperate to provide the singulator 50 with its stepped bowl-like configuration and together they form a seed singulation area or seed bowl 50b. During operation of the planting unit 40 the seed bowl 50b contains or holds a plurality of potato seeds therein. The seed holder 57 substantially seals the bottom of the seed bowl 50b and prevents the plurality of seeds from exiting downward out of the seed bowl 50b. The seed retention surfaces 52s, 54s act as bowl walls, having sufficient wall heights 52h, 54h to prevent the plurality of seeds from exiting radially out of the seed bowl 50b past their respective circular perimeters 52p, 54p; except for as specifically noted below to feed or exit singulated potato seeds from the singulator 50 via the seed discharge 42.

Each of the lower inner circular wall 52, the upper outer circular wall 54 and the bottom seed holder 57 are separate components, which each may move or rotate relative to each other, they are dimensioned with sufficiently close tolerances and spacing so that they can cooperate as noted above to form the seed bowl 50b and contain seeds therewithin. Advantageously, the seed singulation area or seed bowl 50b will hold these plurality of seeds while the seed singulator 50 separates individual potato seeds P therefrom and delivers them to the seed discharge 42.

In this embodiment of the singulator 50 the seed singulating ledge 56 is an annular ledge positioned between the outer and inner circular perimeters 52p, 54p; i.e. unlike the previous embodiments, the ledge 56 does form a complete annular path between said perimeters 52p, 54p. Preferably, in this embodiment, the seed discharge opening 56o is provided in the outer circular wall 54, so that singulated seeds exit the singulator 50 in an outward, radial manner.

The seed singulating ledge 56 may also be divided into a seed receiving area 59r and a seed singulation area 59s. During operation of the planting unit 40 the seed receiving area 59r will generally receive a plurality of potatoes or seeds from either a secondary conveyor or from the seed holder 57 (in a manner similar to that described above for the other embodiments of the singulator 50).

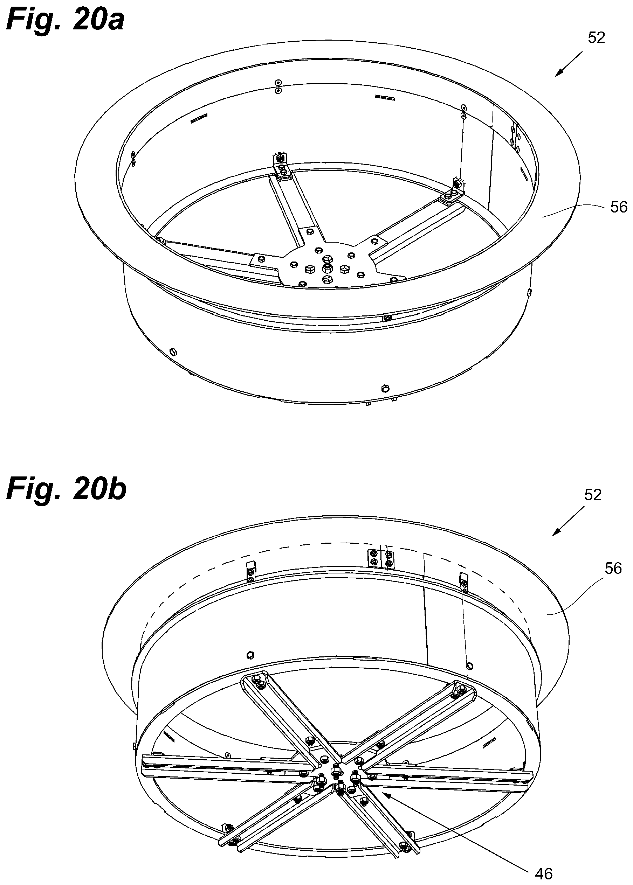

Preferably, and unlike the previous embodiments, the seed singulation ledge 56 in this embodiment is attached to, or integral with, the inner circular wall 52 (see FIGS. 20a - 20b); and both the inner circular wall 52 and the ledge 56 are mounted to one of the drive units 44 via a drive linkage 46. Accordingly, in this embodiment, when the singulator 50 is actuated (e.g. in a rotary fashion), and the drive unit 44 imparts rotary force to the inner circular wall 52 and seed singulating ledge 56, the inner circular wall 52 and seed singulating ledge 56 rotate together -relative to the outer circular wall 54 (which is preferably kept stationery with respect to a planter 10 upon which the singulator may be mounted). Preferably, both the inner circular wall 52 and the singulating ledge 56 are actuated or driven (e.g. in a rotary fashion) along the first direction D1 by one or more of the drive units 44 and associated linkage 46 in a conventional manner.

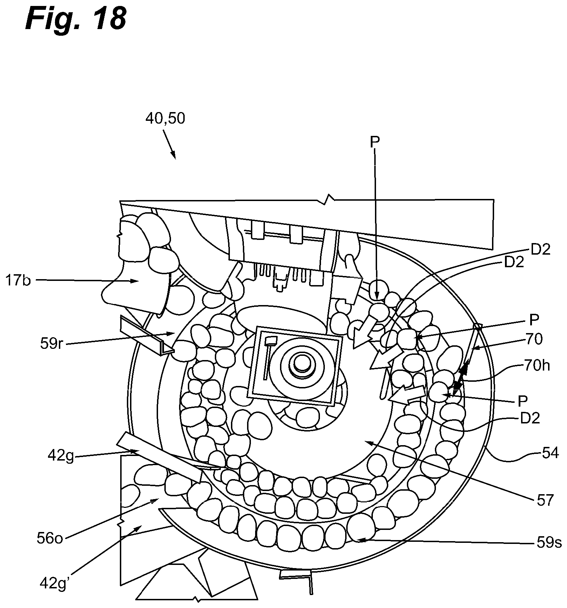

During operation the singulating ledge 56 functions to advance any potato seeds that are present on said ledge 56 in a first direction D1 at a first speed from the seed receiving area 59r to the seed singulation area 59s, where any plurality of seeds are then singulated, and as further described below. Because the ledge 56 has a ledge width 56w dimensioned to only support a single row of seeds, it is the rotating movement of the ledge 56w and the force of gravity acting on any excess seeds (that otherwise may have formed a second row of seeds) that cooperate to provide the singulating action of this embodiment of the singulator 50 - i.e. thereby causing any additional seeds (that may otherwise have been supported in a secondary row on the ledge 56) to fall back into the seed holder 57; e.g. see seeds P in FIG. 18 falling back into the bowl 57 in direction D2.

The seed discharge 42 in this embodiment preferably comprises a first guide member 42g and a second guide member 42g', between which the seed discharge opening 56o is positioned. Preferably, the first guide member 42g is an extension, or portion, of the outer circular wall 54 which extends radially inward from its circular perimeter 54p and projects over the seed singulating ledge 56 to act as a redirecting member to direct any seeds that may be moving in direction D1 on the seed singulating ledge 56 towards the seed discharge opening 56o. More preferably, the second guide member 42g' is an extension, or portion, of the outer circular wall 54 which extends radially outward from said circular perimeter 54p, to guide or direct seeds exiting the planting unit 40 in a desired direction (e.g. to a furrow for planting).

During operations, the ledge 56, as supported by the inner circular wall 52, will continue rotating in the first direction D1 and any seeds positioned thereon will pass by the seed discharge opening 56o. Any singulated seeds supported and advanced by the ledge 56 will then preferably pass through the opening 56o, to exit the planting unit 40 via the seed discharge 42; although some seeds may fall back into the seed bowl 50b to rest on the seed holder 57. Advantageously, first guide member 42g projects over the seed singulating ledge 56 to act as redirecting member to any seeds that may be on the seed singulating ledge 56, i.e. to direct them towards the seed discharge opening 56o.

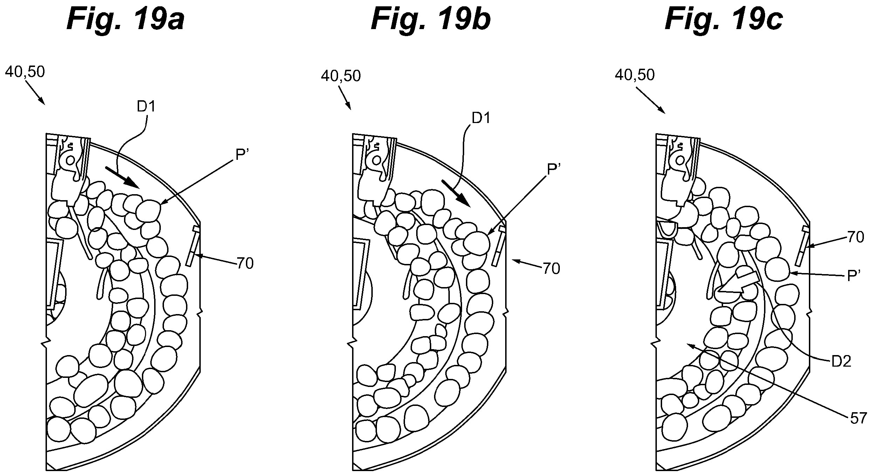

Figures 18-19c illustrate yet another embodiment of a planting unit 40. This embodiment of the planting unit 40 is similar to the embodiment of FIGS. 17a-17d, but further comprises a mechanical seed ejector 70, and the second guide member 42g' is a substantially horizontal, planar chute member. In this embodiment the mechanical seed ejector 70 is an interference member positioned at a predetermined height 70h above the seed singulating ledge 56 so as to allow a row of singulated seed to pass thereunder without any difficulty, but to contact, interfere with, and knock down any seeds that may be sitting on top of said row of singulated seeds; see FIGS. 19a-19c and noting that a seed P' (which initially was sitting on top of the plurality of seeds singulated into a row) is moving in direction D1 and is then knocked down in direction D2 into seed holder 57 by the mechanical seed ejector 70. The mechanical seed ejector 70 in this embodiment is in the form of a bolt mounted to inside of the outer circular wall 54, but mechanical seed ejector 70 may be of any other suitable conventional form that acts to knock down seeds which sit on top of the row of singulated seeds.

Those of ordinary skill in the art will appreciate that various modifications to the invention as described herein will be possible without falling outside the scope of the invention. In the claims, the word "comprising" is used in its inclusive sense and does not exclude other elements being present. The indefinite article "a" before a claim feature does not exclude more than one of the features being present.

## Claims

1. A planting unit (40) for singulating a plurality of seeds (P), said planting unit (40) comprising:
a seed holder (57),
a seed discharge (42),
at least one drive unit (44),
a seed singulator (50),
wherein the seed singulator (50) further comprises:
an open top (50t),
a stepped bowl configuration having a lower inner circular wall (52) and an upper outer circular wall (54), wherein each of the inner and the outer circular wall (52, 54) form a circular perimeter (52p, 54p) with a respective wall height,
a seed singulating ledge (56) having a seed receiving area (59r) and a seed singulation area (59s),
wherein the seed singulating ledge (56) is an annulus sector and is positioned between an outer circular perimeter (52p) of said lower inner circular wall (52) and an inner circular perimeter (54p) of said upper outer circular wall (54),
wherein the seed singulating ledge (56) is driven by the at least one drive unit (44) to rotate relative to the upper outer circular wall (54) along a first direction to move one or more of said plurality of seeds (P) between the seed receiving area (59r) and seed singulation area (59s),
wherein the seed singulating ledge (56) has a ledge axis (56l), and wherein during operation of the planting unit (40) the ledge axis (56l) is maintained substantially along the horizontal plane,
wherein the seed singulator further comprises a first guide member (42g) which extends over the seed singulating ledge (56), and
wherein the seed singulating ledge (56) has a ledge width (56w) of such dimensions to support a plurality of seeds (P) only in a single row-like manner.

2. The planting unit (40) according to claim 1, wherein the seed singulating ledge (56) has a ledge width (56w) between 3.81 cm and 6.35 cm.

3. The planting unit (40) according to any previous claim, wherein the seed singulation ledge (56) is attached to, or integral with, the inner circular wall (52), wherein both the inner circular wall (52) and the ledge (56) are mounted to one of the drive units (44) via a drive linkage (46).

4. The planting unit (40) according to the previous claim, wherein the inner circular wall (52) and seed singulating ledge (56) are rotated together relative to the outer circular wall (54).

## Patentansprüche

1. Pflanzeinheit (40) zum Vereinzeln einer Vielzahl von Samen (P), wobei die Pflanzeinheit (40) umfasst:
einen Samenhalter (57),
einen Samenaustritt (42),
mindestens eine Antriebseinheit (44),
einen Samenvereinzler (50),
wobei der Samenvereinzler (50) weiter umfasst:
ein offenes Oberteil (50t),
eine gestufte Schüsselkonfiguration, die eine untere innere kreisförmige Wand (52) und eine obere äußere kreisförmige Wand (54) aufweist, wobei jede der inneren und der äußeren kreisförmigen Wand (52, 54) einen kreisförmigen Umfang (52p, 54p) mit einer jeweiligen Wandhöhe bildet,
einen Samenvereinzelungsabsatz (56), der einen Samenaufnahmebereich (59r) und einen Samenvereinzelungsbereich (59s) aufweist,
wobei der Samenvereinzelungsabsatz (56) ein Ringabschnitt ist und zwischen einem äußeren kreisförmigen Umfang (52p) der unteren inneren kreisförmigen Wand (52) und einem inneren kreisförmigen Umfang (54p) der oberen äußeren kreisförmigen Wand (54) positioniert ist,
wobei der Samenvereinzelungsabsatz (56) durch die mindestens eine Antriebseinheit (44) angetrieben wird, um sich relativ zu der oberen äußeren kreisförmigen Wand (54) entlang einer ersten Richtung zu drehen, um einen oder mehrere der Vielzahl von Samen (P) zwischen dem Samenaufnahmebereich (59r) und dem Samenvereinzelungsbereich (59s) zu bewegen,
wobei der Samenvereinzelungsabsatz (56) eine Absatzachse (56l) aufweist und wobei im Laufe des Betriebs der Pflanzeinheit (40) die Absatzachse (56l) im Wesentlichen entlang der horizontalen Ebene gehalten wird,
wobei der Samenvereinzler weiter ein erstes Führungselement (42g) umfasst, das sich über dem Samenvereinzelungsabsatz (56) erstreckt, und
wobei der Samenvereinzelungsabsatz (56) eine Absatzbreite (56w) von solchen Abmessungen aufweist, um eine Vielzahl von Samen (P) nur in einer einzigen reihenartigen Weise zu tragen.

2. Pflanzeinheit (40) nach Anspruch 1, wobei der Samenvereinzelungsabsatz (56) eine Absatzbreite (56w) zwischen 3,81 cm und 6,35 cm aufweist.

3. Pflanzeinheit (40) nach einem vorstehenden Anspruch, wobei der Samenvereinzelungsabsatz (56) an der inneren kreisförmigen Wand (52) befestigt oder mit dieser einstückig ist, wobei sowohl die innere kreisförmige Wand (52) als auch der Absatz (56) über ein Antriebsgestänge (46) an einer der Antriebseinheiten (44) montiert sind.

4. Pflanzeinheit (40) nach dem vorstehenden Anspruch, wobei die innere kreisförmige Wand (52) und der Samenvereinzelungsabsatz (56) gemeinsam relativ zu der äußeren kreisförmigen Wand (54) gedreht werden.

## Revendications

1. Unité de plantation (40) destinée à séparer une pluralité de semences (P), ladite unité de plantation (40) comprenant :
un porte-semences (57),
un dispositif d'évacuation de semences (42),
au moins une unité d'entraînement (44),
un séparateur de semences (50),
dans laquelle le séparateur de semences (50) comprend en outre :
un toit ouvert (50t),
une configuration de cuve étagée présentant une paroi circulaire intérieure inférieure (52) et une paroi circulaire extérieure supérieure (54), où chacune des parois circulaires intérieure et extérieure (52, 54) forme un périmètre circulaire (52p, 54p) avec une hauteur de paroi respective,
un rebord de séparation de semences (56) présentant une zone de réception de semences (59r) et une zone de séparation de semences (59s),
dans laquelle le rebord de séparation de semences (56) est un secteur annulaire et est positionné entre un périmètre circulaire extérieur (52p) de ladite paroi circulaire intérieure inférieure (52) et un périmètre circulaire intérieur (54p) de ladite paroi circulaire extérieure supérieure (54),
dans laquelle le rebord de séparation de semences (56) est entraîné par la au moins une unité d'entraînement (44) pour tourner par rapport à la paroi circulaire extérieure supérieure (54) dans une première direction afin de déplacer une ou plusieurs de ladite pluralité de semences (P) entre la zone de réception de semences (59r) et la zone de séparation de semences (59s),
dans laquelle le rebord de séparation de semences (56) présente un axe de rebord (56l), et dans laquelle, pendant le fonctionnement de l'unité de plantation (40), l'axe de rebord (56l) est maintenu sensiblement le long du plan horizontal, dans laquelle le séparateur de semences comprend en outre un premier élément de guidage (42g) qui s'étend au-dessus du rebord de séparation de semences (56), et
dans laquelle le rebord de séparation de semences (56) présente une largeur de rebord (56w) de telles dimensions pour supporter une pluralité de semences (P) uniquement de manière à ce qu'elles soient disposées sur une seule rangée.

2. Unité de plantation (40) selon la revendication 1, dans laquelle le rebord de séparation de semences (56) présente une largeur de rebord (56w) entre 3,81 cm et 6,35 cm.

3. Unité de plantation (40) selon une quelconque revendication précédente, dans laquelle le rebord de séparation de semences (56) est fixé à, ou fait partie intégrante de, la paroi circulaire intérieure (52), dans laquelle la paroi circulaire intérieure (52) et le rebord (56) sont montés sur l'une des unités d'entraînement (44) via une liaison d'entraînement (46).

4. Unité de plantation (40) selon la revendication précédente, dans laquelle la paroi circulaire intérieure (52) et le rebord de séparation de semences (56) sont tournés ensemble par rapport à la paroi circulaire extérieure (54).
